# EUROPÄISCHE PATENTSCHRIFT

(11) **EP 2 029 407 B1**
(45) Veröffentlichungstag und Bekanntmachung des Hinweises auf die Patenterteilung: **19.01.2011**
(21) Anmeldenummer: 07728507.0
(22) Anmeldetag: 25.04.2007
(51) Int. Cl.: B60T 8/48

(54) **HYDRAULISCHE FAHRZEUGBREMSANLAGE MIT MUSKELKRAFTBETÄTIGBARER BETRIEBSBREMSE UND MIT EINER VORRICHTUNG ZUR REGELUNG DES RADSCHLUPFS**
HYDRAULIC VEHICLE BRAKE SYSTEM HAVING A SERVICE BRAKE WHICH CAN BE ACTUATED BY MUSCLE FORCE AND HAVING A DEVICE FOR REGULATING THE WHEEL SLIP
INSTALLATION DE FREIN HYDRAULIQUE POUR VÉHICULE AVEC FREIN DE SERVICE ACTIONNABLE PAR LA FORCE MUSCULAIRE ET AVEC UN DISPOSITIF DE RÉGULATION DU PATINAGE DES ROUES

(30) Priorität: 06.06.2006 DE 102006026155
(43) Veröffentlichungstag der Anmeldung: 04.03.2009
(73) Patentinhaber: Robert Bosch GmbH, 70442 Stuttgart (DE)
(72) Erfinder: WEH, Andreas, 87477 Sulzberg (DE); TANDLER, Juergen, 87629 Fuessen (DE)
(86) Internationale Anmeldenummer: PCT/EP2007/054051
(87) Internationale Veröffentlichungsnummer: WO 2007/141092

(56) Entgegenhaltungen:
- EP-A1- 0 385 816
- EP-A2- 0 509 240
- WO-A-91/08130
- WO-A-93/09010
- DE-A1- 3 940 177
- DE-A1- 19 709 742
- DE-A1- 19 753 308
- JP-A- 10 338 118

## Beschreibung

### Stand der Technik

Die Erfindung geht aus von einer hydraulischen Fahrzeugbremsanlage mit muskelkraftbetätigbarer Betriebsbremse und einer Vorrichtung zur Regelung des Radschlupfs entsprechend den gattungsbildenden Merkmalen des Anspruchs 1.

Eine derartige Fahrzeugbremsanlage ist aus der WO91/08130 A1 bekannt.

Unter radschlupfgeregelten Fahrzeugbremsanlagen werden im Folgenden Fahrzeugbremsanlagen mit Antiblockierschutzregelung (ABS), mit Antriebschlupfregelung (ASR) oder mit elektronischem Stabilitätsprogramm (ESP) verstanden. Derartige Fahrzeugbremsanlagen weisen ein Hydraulikaggregat auf, das zwischen einen vom Fahrer betätigbaren Hauptbremszylinder und wenigstens eine Radbremse geschaltet ist. Dieses Hydraulikaggregat ist unter anderem mit magnetisch betätigbaren Wegeventilen, Pumpen, einem Pumpenantrieb und mit Speichern ausgestattet, welche die Pumpen mit Druckmittel versorgen. Zur Betätigung des Pumpenantriebs ist zudem ein Antriebsmotor vorhanden. Über ein elektronisches Steuergerät kann der Antriebsmotor und die Wegeventile zur bedarfsweisen Regelung des Drucks in den Radbremsen angesteuert werden. Darüber hinausgehende Detailinformationen sind den Ausführungen in der Broschüre "Fachwissen Kfz-Technik, Sicherheits- und Komfortsysteme, Fahrstabilisierungssysteme", Gelbe Reihe, Ausgabe 2004 der Robert Bosch GmbH Stuttgart ISBN 3-7782-2026-8, insbesondere ab Seite 90 entnehmbar.

Die darin beschriebenen Fahrzeugbremsanlagen gleichen sich hinsichtlich der Auslegung ihres Hydraulikschaltplans, unterscheiden sich jedoch je nach Funktionsumfang in ihrem Bauaufwand. In der Praxis werden beispielsweise unterschiedliche Bauformen von Pumpen und/oder eine kleinere oder größere Anzahl unterschiedlich gestalteter Wegeventile eingesetzt, um die jeweils gewünschte Funktionalität zu erreichen. Fahrzeugbremsanlagen mit Antiblockierschutzregelung kommen beispielsweise mit nicht selbst saugenden Pumpen, bezeichnet als so genannte Rückförderpumpen, aus. Deren Aufgabe ist es, bei einem Bremsvorgang mit bestehendem Radschlupf, zur Senkung des Bremsdrucks, Druckmittel aus einer betroffenen Radbremse zurück zum Hauptbremszylinder zu fördern. Weil das Druckmittel in der Radbremse aufgrund der dabei stattfindenden Betätigung des Hauptbremszylinders durch den Fahrer bereits unter erhöhtem Druck steht, muss die Pumpe selbst keine Saugarbeit leisten.

Fahrzeugbremsanlagen mitASR- bzw. ESP-Funktion müssen demgegenüber in der Lage sein einen Bremsdruck in einer oder mehreren Radbremsen, unabhängig von einer Betätigung des Hauptbremszylinders durch den Fahrer, aufzubauen, um beim Beschleunigen des Fahrzeugs oder bei einer Kurvenfahrt auftretenden Radschlupf zu beseitigen. Dies erfordert Pumpen, die selbst saugend ausgelegt sind. Selbst saugende Pumpen sind in der Lage Druckmittel zu fördern, auch wenn an ihrer Einlassseite keine oder eine nur geringe Druckdifferenz herrscht. Ein Ausführungsbeispiel einer selbst saugenden Pumpe ist beispielsweise aus der Schutzrechtsanmeldung DE 199 28 913 A1 vorbekannt.

Unabhängig von der Art der Fahrzeugbremsanlage sind den Pumpen hydraulische Speicher vorgeschaltet. Diese Speicher stellen den Pumpen Druckmittel zur Verfügung und gewährleisten dadurch den Pumpenanlauf. Bekannte Fahrzeugbremsanlagen verwenden hierzu Federkolbenspeicher. Diese umfassen einen, in einem Speichergehäuse beweglich geführten Kolben, der durch umfangseitige Abdichtung eine erste, mit Druckmittel befüllbare Speicherkammer von einer zweiten, mit einem Gas befüllten Speicherkammer trennt. Der Kolben wird von einer Feder in Richtung seiner Grundstellung beaufschlagt. In dieser Grundstellung befindet sich in der ersten Speicherkammer kein Druckmittel. Bei bekannten Speichern erfolgt ein Druckmittelzufluss bzw. ein Druckmittelabfluss durch einen gemeinsamen Versorgungskanal. Derartige Speicher sind beispielsweise in der Schutzrechtsanmeldung DE 199 42 293 A1 beschrieben.

Um im Falle eines entleerten Speichers zu verhindern, dass von der Pumpe aus dem Hauptbremszylinder angesaugtes Druckmittel zur Speicherkammer strömt, ist in der Versorgungsleitung eines derartigen Speichers ein Rückschlagventil angeordnet. Bekannte Rückschlagventile haben zur Steuerung eines Ventilsitzes einen durch eine Feder beaufschlagten Ventilschließkörper.

Ein defektes, undichtes Rückschlagventil würde in Verbindung mit dem einzigen Versorgungskanal des Speichers dazu führen, dass der von der selbst ansaugenden Pumpe erzeugte Unterdruck die Radbremsen beaufschlagen könnte. Aufgrund dieses Unterdrucks würden die Bremskolben dieser Radbremsen in eine Extremposition verbracht. Bei einem nachfolgenden Bremsvorgang müsste für einen Bremsdruckaufbau deshalb unverhältnismäßig viel Druckmittel in die Radbremsen hineinverdrängt werden. Dies könnte der Fahrer anhand eines langen Pedalwegs wahrnehmen, was Irritationen über die Funktionstüchtigkeit der Fahrzeugbremsanlage auslösen könnte.

Darüber hinaus erhöht die Anzahl unterschiedlicher Bauteile für Fahrzeugbremsanlagen mit unterschiedlichem Funktionsumfang die Kosten für die Entwicklung und Unterhaltung eines Baukastensystems. Gleichfalls sind zur Darstellung der bekannten Fahrzeugbremsanlagen relativ viele Einzelbauteile zu montieren, was sich negativ auf die Herstellungskosten und das sich ergebende Bauvolumen auswirkt. Bekannte Fahrzeugbremsanlagen zeigen zudem Verbesserungspotential hinsichtlich ihrer Funktionseigenschaften bei einer stattfindenden Regelung des Bremsschlupfs.

Aus der DE19753308 A1 ist eine Fahrzeugbremsanlage mit einem Membranspeicher bekannt. DE 19709742 A1 zeigt eine vormantierbare Membranspeicher-Baueinheit.

### Offenbarung der Erfindung

### Vorteile der Erfindung

Eine erfindungsgemäße hydraulische Fahrzeugbremsanlage, entsprechend den Merkmalen des Anspruchs 1, weist demgegenüber den Vorteil auf, dass sie mit weniger unterschiedlichen Einzelteilen auskommt und damit kostengünstiger darstellbar ist. Die verwendeten Einzelteile lassen sich sowohl für Fahrzeugbremsanlagen mit Antiblockierschutz-, Antriebschlupf- oder Fahrstabilitätsregelprogramm einsetzen. Eine erfindungsgemäße Fahrzeugbremsanlage weist verbesserte Funktionseigenschaften während der Regelung des Radschlupfs auf und erlaubt, aufgrund der verringerten Anzahl von Einzelteilen, kompaktere Abmessungen ihres Hydraulikaggregats. Erreicht werden diese Vorteile unter anderem durch eine Verwendung einer selbst saugenden Pumpe für alle verschiedenen Arten von Fahrzeugbremsanlagen, also auch für reine Antiblockierschutzbremsanlagen, in Verbindung mit hydraulischen Speichern die jeweils über einen Zulauf und über einen davon getrennten Ablauf mit Druckmittel versorgt werden. Die verwendeten Speicher besitzen ein frei beweglich zwischen zwei Endlagen angeordnetes Trennelement zur Trennung einer ersten Speicherkammer von einer zweiten Speicherkammer. Dieses Trennelement ist darüber hinaus in der Lage, in einer seiner Endlagen eine Druckmittelverbindung vom Zulauf zum Ablauf des Speichers abzusperren. Es funktioniert ohne zusätzliches Federelement, wodurch sich das in der Speicherkammer speicherbare Druckmittelvolumen bei unveränderten Abmessungen im Vergleich zu einem Federkolbenspeicher erhöht. Zudem weist der Speicher eine Druck/Volumen-Kennlinie mit verbesserten Hystereseverhalten auf, da der Einfluss eines Federelements auf die Hysterese entfällt. Weitere Vorteile oder vorteilhafte Weiterbildungen der Erfindung ergeben sich aus den Unteransprüchen und der nachfolgenden Beschreibung.

Anspruch 2 begehrt Schutz für ein im Ablauf des Speichers angeordnetes Rückschlagventil besonderer Ausbildung. Dieses Rückschlagventil verhindert einen Rückfluss von Druckmittel in die Speicherkammer des Speichers hinein und kann aufgrund der zusätzlichen Abdichtfunktion des Trennelements des Speichers ebenfalls ohne Rückstellfeder ausgebildet sein. Neben der Einsparung bei den Teilekosten baut das Rückschlagventil dadurch gegenüber bekannten Anordnungen kompakter und kostengünstiger. Ein derartiges Rückschlagventil ist nur in Fahrzeugbremsanlagen mit elektronischem Stabilitätsregelprogramm oder mit Antriebschlupfregelung erforderlich, weil dort ein Aufbau von Bremsdruck, unabhängig vom Fahrer, stattfinden kann und weil für diesen Druckaufbau unter Umständen Druckmittel aus dem Hauptbremszylinder von der Pumpe angesaugt werden muss. In diesem Fall verhindert das Rückschlagventil, dass vom Hauptbremszylinder kommendes Druckmittel in den Speicher strömt. Fahrzeugbremsanlagen mit Antiblockierschutzregelung kommen ohne dieses Rückschlagventil aus.

Mit den Ansprüchen 3 und 4 werden alternative Ausbildungsvarianten für einen erfindungsgemäßen Speicher mit einem in einer Endlage dichtenden Trennelement beansprucht, die gleichermaßen vorteilhaft sind in Bezug auf ihren geringen Bauraum und die Kosten zu ihrer Darstellung.

Anspruch 5 beruht auf einer vorteilhaften Anzahl und Anordnung der in die erste Speicherkammer eines solchen Speichers mündenden Zu- und Abläufe.

### Zeichnung

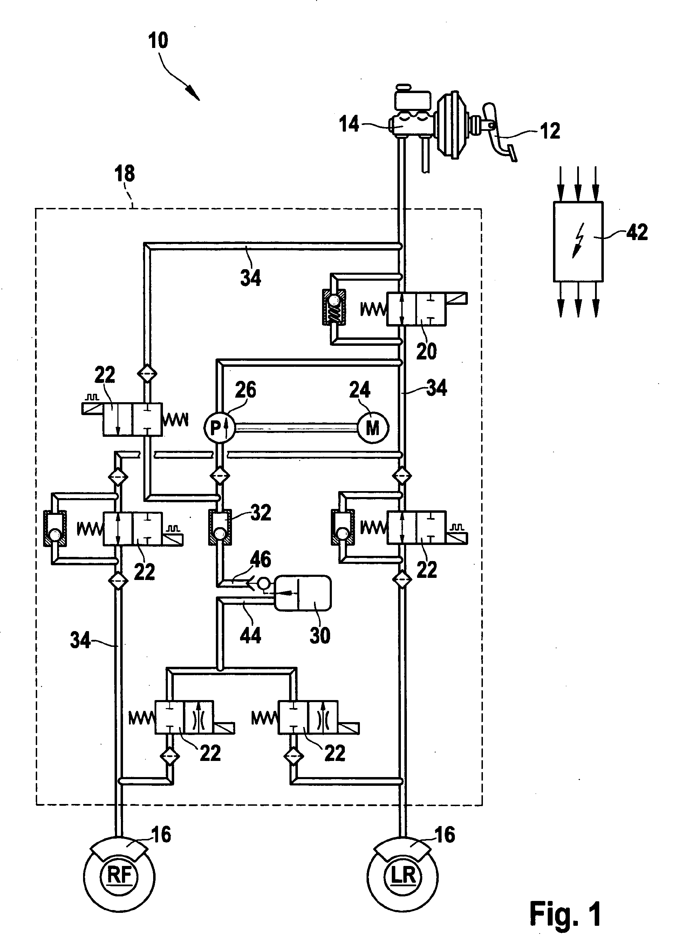

Die Erfindung ist anhand der Zeichnung dargestellt und in der nachfolgenden Beschreibung näher erläutert. Die Zeichnung umfasst insgesamt 6 Figuren, wobei Figur 1 anhand eines Hydraulikschaltplans den Aufbau einer erfindungsgemäßen hydraulischen Fahrzeugbremsanlage mit muskelkraftbetätigter Betriebsbremse und einer Vorrichtung zur Regelung des Radschlupfs zeigt. Dabei handelt es sich exemplarisch um eine Fahrzeugbremsanlage mit elektronischem Fahrstabilitätsregelprogramm (ESP).

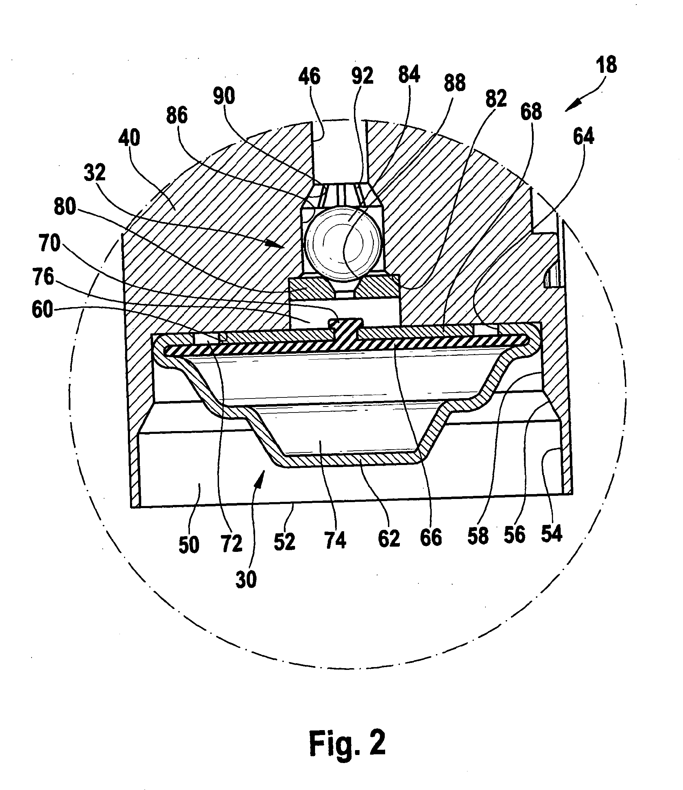

Figur 2 zeigt einen Speicher in einer ersten, besonders bevorzugten, konstruktiven Ausführungsvariante zusammen mit einem im Ablauf des Speichers angeordneten Rückschlagventil.

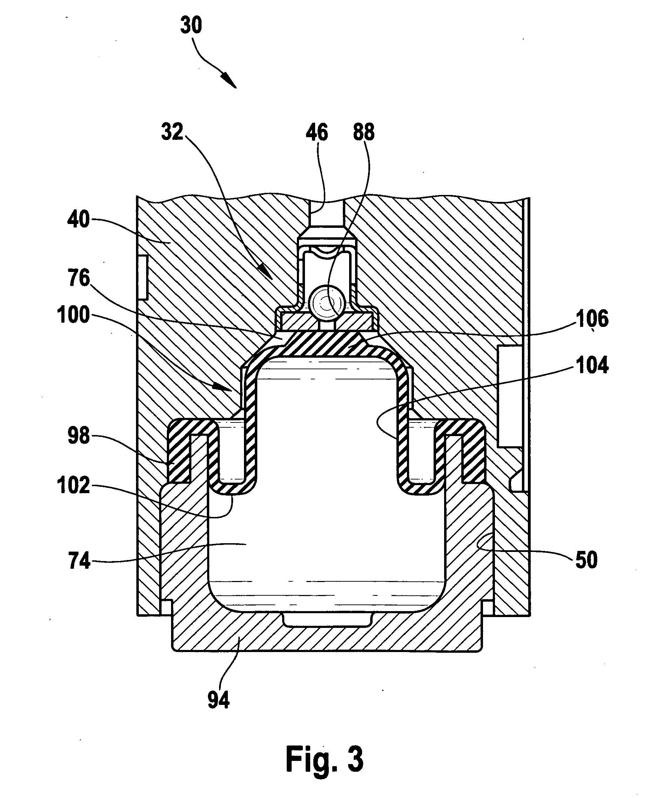

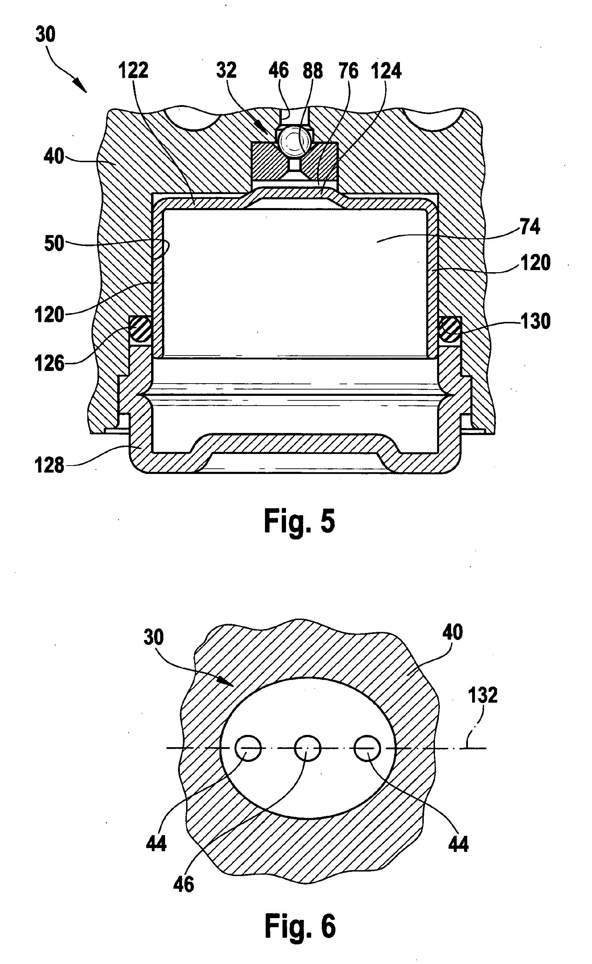

Weitere Ausführungsvarianten für Speicher sind den Figuren 3 bis 5 entnehmbar, wobei die Variante der Figur 5 eine nicht beanspruchte variante darstellt.

Schließlich zeigt Figur 6 einen Schnitt quer durch einen Speicher und zwar im Bereich der ein-/ausmündenden Versorgungskanäle. Aus dieser Darstellung ist eine vorteilhafte Anzahl und Anordnung der Zu- bzw. Abläufe eines Speichers ersichtlich.

### Beschreibung der Ausführungsbeispiele

Figur 1 zeigt in schematischer Darstellung den Schaltplan einer hydraulischen Fahrzeugbremsanlage 10 mit einer Vorrichtung zur Regelung des Radschlupfs. Zu erkennen sind ein von einem Bremspedal 12 betätigbarer Hauptbremszylinder 14 und zwei in einem Bremskreis miteinander verschaltete Radbremsen 16. Zwischen dem Hauptbremszylinder 14 und den Radbremsen 16 ist ein Hydraulikaggregat 18 angeordnet. Dieses Hydraulikaggregat 18 ist in der Figur 1 anhand einer gestrichelten Umrisslinie veranschaulicht. Es umfasst verschiedene elektromagnetisch ansteuerbare Wegeventile 20, 22, eine von einem Antriebsmotor 24 betätigbare Pumpe 26, einen die Pumpe 26 mit Druckmittel versorgenden hydraulischen Speicher 30 sowie ein, zwischen dem Speicher 30 und der Pumpe 26 befindliches Rückschlagventil 32. Diese erwähnten Hydraulikkomponenten sind anhand von Druckmittel führenden Leitungen 34 zu einem Hydraulikkreis verschaltet. Diese Leitungen 34 sind in einem Hydraulikblock 40 (Figur 2) des Hydraulikaggregats 18 anhand von Bohrungen ausgebildet, die in einem späteren Arbeitsgang nach außen verschlossenen werden. Am Hydraulikblock 40 sind auch die erwähnten Hydraulikkomponenten befestigt. Zu deren elektrischer Ansteuerung ist ein elektronisches Steuergerät 42 vorhanden, welches ebenfalls am Hydraulikblock 40 angeordnet sein kann.

Dieser Aufbau einer hydraulischen Fahrzeugbremsanlage zählt insoweit zum Stand der Technik. Hinsichtlich der Wirkungsweise dieser Fahrzeugbremsanlage kann deshalb auf die Ausführungen in der eingangs erwähnten Broschüre verwiesen werden.

Die Erfindung unterscheidet sich gegenüber der in dieser Broschüre erläuterten Fahrzeugbremsanlage durch die Ausbildung der vorgesehenen Speicher 30, der Anbindung dieser Speicher 30 an die Hydraulikkreise sowie hinsichtlich der konstruktiven Ausführung der eingesetzten Rückschlagventile 32. Die geänderte Ausbildung des der Erfindung zugrunde liegenden Speichers 30 ist in Figur 1 anhand des Schaltsymbols veranschaulicht und wird im Folgenden in Verbindung mit der Beschreibung der Figuren 2 bis 5 deutlich gemacht. Bezüglich der Anbindung des Speichers 30 an den Hydraulikkreis ist der Figur 1 entnehmbar, dass ein erfindungsgemäßer Speicher 30 zu seiner Versorgung mit Druckmittel nunmehr wenigstens einen Zulauf 44 und wenigstens einen getrennt vom Zulauf 44 ausgebildeten Ablauf 46 aufweist. Als Rückschlagventil 32, das zwischen der Pumpe 26 und dem Speicher 30 angeordnet ist, wird nach Figur 1 ein Rückschlagventil 32 ohne Rückstellfeder eingesetzt. Die fehlende Rückstellfeder wird in den betreffenden Ansprüchen durch die Formulierung "Rückschlagventil mit frei beweglich aufgenommenen Ventilschließkörper" umschrieben.

Figur 2 zeigt einen Ausschnitt des erwähnten Hydroblocks 40 des Hydraulikaggregats 18 mit einem erfindungsgemäß ausgebildeten Speicher 30. Das Speichergehäuse dieses Speichers 30 wird durch die Wandung einer von außen nach innen mehrfach abgestuften Bohrung 50 gebildet, welche von der Unterseite 52 her in das Innere des Hydroblocks 40 hineinführt. Die Bohrung 50 gliedert sich in einen außen liegenden zylindrischen Randabschnitt 54, einen sich daran anschließenden, nach innen konisch, verengenden Einführungsabschnitt 56 und einen innen liegenden zylindrischen Befestigungsabschnitt 58. Dieser Befestigungsabschnitt 58 endet in einer waagerecht verlaufenden Anschlagschulter 60, in deren Zentrum ein Ablauf 46 ausmündet.

In den Befestigungsabschnitt 58 ist ein topfförmiges Trägerelement 62 eingepresst, das beispielsweise aus einer Blechplatine durch Tiefziehen hergestellt werden kann. Dessen Öffnung 64 zeigt in Richtung des Ablaufs 46 und ist vollständig abgedeckt von einer elastischen Membran 66 aus druckmittelbeständigem Material. Diese Membran 66 ist entlang ihres Außenumfangs mit dem Trägerelement 62 verbördelt, wobei der sich durch die Verbördelung ergebende Umfang des Trägerelements 62 gleichzeitig dazu dient, dieses Trägerelement 62 im Befestigungsabschnitt 58 kraftschlüssig zu verankern. Auf der dem Ablauf 46 zugewandten Außenseite der Membran 66 liegt eine Dichtplatte 68 auf. Diese ist mit der Membran 66 formschlüssig verbunden und zwar anhand eines in Richtung des Ablaufs 46 vorstehenden Noppens 70. Der Noppen 70 durchdringt eine Ausnehmung im Zentrum der Dichtplatte 68 und hintergreift die Ausnehmung mit seinem verdickten Kopf. Die Dichtplatte 68 überdeckt den Querschnitt des Ablaufs 46 vollständig, weist aber einen kleineren Außendurchmesser auf, als der Innendurchmesser der Öffnung 64 des Trägerelements 62. Dadurch ergibt sich zwischen dem inneren Ende der Verbördelung und der Dichtplatte 68 ein in axialer Richtung von der Membran 66 und der Anschlagschulter 60 begrenzter Ringraum 72. Es ist davon auszugehen, dass in diesen Ringraum 72 der wenigstens eine von der Radbremse 16 (Figur 1) kommende Zulauf 44 (Figur 1) des Speichers 30 einmündet.

Die Membran 66 bildet zusammen mit der Dichtplatte 68 ein frei beweglich, im Trägerelement 62, aufgenommenes Trennelement, das eine, im Innern des Trägerelements 62 angeordnete, mit Gas gefüllte (zweite) Speicherkammer 74 gegenüber einer mit hydraulischem Druckmittel der Fahrzeugbremsanlage befüllbaren (ersten) Speicherkammer 76 abdichtet. Diese erste Speicherkammer 76 befindet sich zwischen der Dichtplatte 68 und dem in axialem Abstand zur Dichtplatte 68 im Ablauf 46 des Speichers 30 platzierten Rückschlagventil 32. Sie vergrößert bei einströmendem Druckmittel ihr Volumen, indem die Dichtplatte 68 von der Anschlagschulter 60 abhebt und sich in das Innere des Trägerelements 62 hineinbewegt. In entsprechendem Umfang verkleinert sich dabei das Volumen der Speicherkammer 74.

Das erwähnte Rückschlagventil 32 besteht aus einem Ventilsitzteil 80 in Form einer Lochscheibe, welche in den Ablauf 46 auf Anschlag an einer Schulter 82 eingepresst ist. Das Ventilsitzteil 80 wirkt mit einem Ventilschließkörper 84, hier exemplarisch in Form einer Kugel zusammen. Die Kugel ist stromabwärts des Ventilsitzteils 80 frei beweglich in einem Zylinderabschnitt 86 des Ablaufs 46 aufgenommen und steuert einen konisch geformten Ventilsitz 88 an der Innenseite der Lochscheibe. Eine stromabwärts des Zylinderabschnitts 86 ausgebildete Einschnürung 90 des Ablaufs 46 bildet den Anschluss des Rückschlagventils 32 zu einer Saugseite der Pumpe 26 (siehe Figur 1). An der Einschnürung 90 sind vorzugsweise sternförmig nach außen verlaufende Stege oder Nuten 92 vorhanden, die ein Umströmen des Ventilschließkörpers 84 auch dann gewährleisten, wenn dieser an der Einschnürung 90 anliegt. Das beschriebene Rückschlagventil 32 ist demnach nur in Richtung zur Pumpe 26 hin durchströmbar und sperrt die Gegenrichtung, hin zum Speicher 30, ab.

Die Darstellung nach Figur 2 zeigt den Speicher 30 mit entleerter erster Speicherkammer 76. Entsprechend nimmt das frei bewegliche Trennelement (Membran 66) seine erste Endlage ein. Dabei liegt die Dichtplatte 68 an der Anschlagschulter 60 der Bohrung 50 an und dichtet den Zulauf 44 gegenüber dem Ablauf 46 ab. Unterdruck, erzeugt von der an den Ablauf 46 angeschlossenen selbst saugenden Pumpe 26, kann dadurch nicht in den Zulauf 44 und damit nicht zu den damit verbundenen Radbremsen 16 gelangen. Die saugende Pumpe 26 wird also nur über das geöffnete Wegeventil 20 (Figur 1) mit Druckmittel aus dem Hauptbremszylinder 14 versorgt. Das beschriebene Rückschlagventil 32 verhindert, dass, im Falle einer Pedalbetätigung während einer ablaufenden Radschlupfregelung, unter Druck stehendes Druckmittel aus dem Hauptbremszylinder 14 bei geöffnetem Ventil 20 in den Speicher 30 fließt.

Figur 3 zeigt eine alternative Ausführungsform eines Speichers 30. Auch dessen Speichergehäuse ist von der Wandung einer nach außen offenen Bohrung 50 des Hydroblocks 40 gebildet. Dieser Speicher 30 umfasst einen tassenförmigen Trägerelement 94, das mit seinem offenen Ende voraus in die Bohrung 50 eingepresst ist. Das Trägerelement 94 ist im Bereich seiner Öffnung im Außendurchmesser zurückgenommen, wodurch sich zwischen dem Umfang des Trägerelements 94 und der Innenwand der Bohrung 50 ein Ringraum ergibt. In diesem Ringraum liegt ein entlang des Umfangs des Trägerelements 94 umlaufender Dichtungsabschnitt 98 einer Rollmembran 100 ein. Diese Rollmembran 100 ist dadurch formschlüssig zwischen dem Trägerelement 94 und der Innenwand der Bohrung 50 im Hydroblocks 40 gehalten. Sie überdeckt, unter Ausbildung einer sich in das hohle Innere des Trägerelements 94 erstreckenden Membranfalte 102 sowie eines sich einteilig an die Membranfalte 102 anschließenden Zentralabschnitts 104, die gesamte Öffnung des Trägerelements 94. Die Rollmembran 100 steht mit ihrem Zentralabschnitt 104 axial gegenüber dem umlaufenden Dichtungsabschnitt 98 vor und weist am stirnseitigen Ende ihres Zentralabschnitts 104 einen Steuerquerschnitt 106 auf. Dieses Trennelement (Rollmembran 100) trennt eine zwischen ihr und dem Trägerelement 94 eingeschlossene und mit Gas gefüllte (zweite) Speicherkammer 74 gegenüber einer mit Druckmittel befüllbaren ersten Speicherkammer 76. Die erste Speicherkammer 76 befindet sich zwischen der Rollmembran 100 und einem im Ablauf 46 angeordneten Rückschlagventil 32. Das verwendete Rückschlagventil entspricht in seiner Ausführung im Wesentlichen dem des in Zusammenhang mit Figur 2 beschriebenen Rückschlagventils 32. Ein Unterschied ist, dass das Rückschlagventil 32 hier als eine im Hydroblock 40 verankerbare Baueinheit mit eigenem Ventilgehäuse ausgebildet ist. Das Ventilgehäuse ist stromabwärts des Ventilschließkörpers 84 mit Durchbrüchen versehen, durch die bei geöffnetem Ventilsitz 88 Druckmittel am Ventilschließkörper 84 vorbei zum Ablauf 46 abströmen kann.

Auch die Rollmembran 100 ist frei zwischen zwei Endlagen beweglich aufgenommen. In der dargestellten ersten Endlage ist die druckmittelbefüllte erste Speicherkammer 76 vollständig entleert. Dabei liegt die Rollmembran 100 mit ihrem Steuerquerschnitt 106 an der dem Ventilsitz 88 des Rückschlagventils 32 gegenüberliegenden Seite des Ventilsitzteils 80 an. Damit dichtet die Rollmembran 100 den Zuströmquerschnitt des Rückschlagventils 32 ab und sperrt eine Verbindung vom Zulauf 44 des Speichers 30 zum Ablauf 46. Der Zulauf 44 ist in Figur 3 nicht erkennbar, er mündet jedoch im Bereich der Membranfalte 102 ein. Infolge wird auch hier der Aufbau des von der angetriebenen und an den Ablauf 46 angeschlossenen Pumpe 26 bewirkten Unterdrucks in den mit dem Zulauf 44 kontaktierten Radbremsen 16 verhindert.

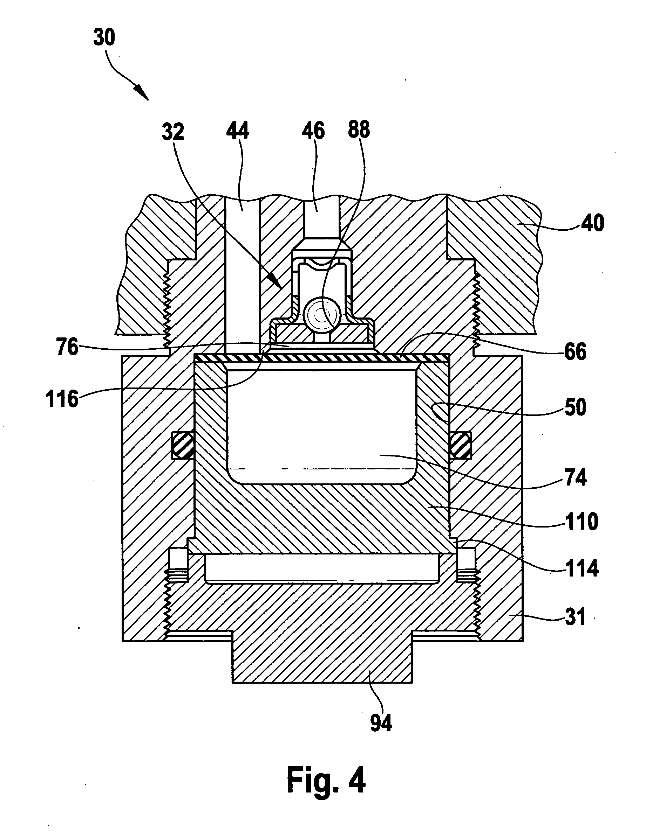

Beim Ausführungsbeispiel nach Figur 4 ist der Speicher 30 als Anschraublösung ausgebildet. Sein Speichergehäuse 31 ist dazu als separates Bauelement ausgeführt, das in den Hydraulikblock 40 eingeschraubt ist. Im Speichergehäuse 31 nimmt eine zylindrische Bohrung 50 einen Hohlkolben 110 auf. Dieser ist mit seiner Öffnung voraus auf Anschlag in das Speichergehäuse 31 eingebaut. Diese Öffnung des Hohlkolbens 110 ist von einer Membran 66 überspannt, welche auf der Stirnseite der die Öffnung umgebenden Wandung 112 aufliegt. Der Hohlkolben 110 ist an seinem von der Membran 66 abgewandten Ende mit einem radial überstehenden Bund 114 versehen. Dieser Bund 114 liegt an einer invers geformten Ausnehmung der Bohrung 50 an. Ein Verschlussstopfen 94, der von außen in die Bohrung 50 einschraubbar ist, beaufschlagt den Hohlkolben 110 mit einer Axialkraft. Durch das Einschraubmoment des Verschlussstopfens 94 ist die Membran 66 zwischen den Hohlzylinder und der Anschlagschulter 60 der Bohrung 50 fixiert. Der Zulauf 44 und der Ablauf 46 dieses Speichers 30 verlaufen zueinander parallel im Einschraubstutzen des Speichergehäuses 31. An ihrer Mündung in die Bohrung 50 ergibt sich ein Steg 116, welcher mit der Membran 66 zusammenwirkt. Die Darstellung nach Figur 4 zeigt die Membran 66 wiederum in ihrer einen Endlage. Die Membran 66 wirkt dabei als Trennelement zwischen den beiden Speicherkammern 74 und 76 und sperrt gleichzeitig in der dargestellten Endlage die Verbindung vom Zulauf 44 zum Ablauf 46 ab. Im Ablauf 46 befindet sich auch bei diesem Ausführungsbeispiel ein Rückschlagventil 32 mit frei beweglichem Ventilschließkörper 84, wie es bereits im Zusammenhang mit Figur 2 offenbart wurde.

Figur 5 zeigt ein weiteres, nicht-beanspruchtes Ausführungsbeispiel eines Speichers 30, bei dem als Trennelement ein hohler Kolben 120 verwendet wird. Dieser Kolben 120 ist aus dünnwandigem starrem Material hergestellt und weist einen Kolbenboden 122 mit einem zentrisch vorstehenden Vorsprung 124 auf. Der hohle Kolben 120 ist in einer Bohrung 50 beweglich geführt und wird umfangseitig abgedichtet durch ein konventionelles Dichtelement 126, beispielsweise einen O-Ring oder einen Quad-Ring. Die Einbaurichtung des Kolbens 20 ist derart, dass der Kolbenboden 122 dem Ablauf 46 des Speichers 30 zugewandt liegt und dass das offene Ende des Kolbens 120 in Richtung zur Öffnung der Bohrung 50 des Hydroblocks 40 zeigt. Diese Öffnung ist durch einen Verschlussdeckel 128 verschlossen. Der Verschlussdeckel 128 ist topfförmig ausgeführt, wobei sein Innendurchmesser dem Innendurchmesser der Bohrung 50 des Hydroblocks 40 entspricht. Dadurch kann der Kolben 120 in das Innere des Verschlussdeckels 128 eindringen. Die innerhalb des Speichers 30 liegende Stirnfläche des Verschlussdeckels 128 hält zusammen mit einer Axialschulter 130 des Hydroblocks 40 das den Kolben 120 abdichtende Dichtelement 126 in Position. Der Verschlussdeckel 128 kann am Hydroblock 40 kraftschlüssig, beispielsweise durch Einpressen, oder formschlüssig, beispielsweise durch Verstemmen, gehalten sein.

Bei diesem Ausführungsbeispiel wirkt der starre Kolben 120 als Trennelement zwischen zwei Speicherkammern 74 und 76. Die erste, mit dem hydraulischen Druckmittel der Fahrzeugbremsanlage befüllbare Speicherkammer 76 ist zwischen dem Kolbenboden 122 und dem Rückschlagventil 32 ausgebildet, die zweite, gasbefüllte Speicherkammer 74 wird vom Inneren des Kolbens 120 und dem Verschlussdeckel 128 begrenzt. In der gezeichneten Stellung ist die erste Speicherkammer 76 im wesentlichen von hydraulischem Druckmittel entleert, wodurch der Kolben 120 mit dem Vorsprung 124 seines Kolbenbodens 122 den Zuströmquerschnitt des Rückschlagventils 32 abdichtet. Da auch bei diesem Ausführungsbeispiel davon auszugehen ist, dass der nicht gezeigte Zulauf 44 in die erste Speicherkammer 76 ein einmündet, sperrt der Kolben 120 in der gezeichneten Endlage somit auch die druckmittelleitende Verbindung vom Zulauf 44 zum Ablauf 46.

Figur 6 zeigt die Relativposition der Zu- und Abläufe 44, 46 eines Speichers 30 anhand eines Schnitts quer durch den Speicher 30 im Bereich der Mündungsquerschnitte dieser Kanäle. Der Figur 6 sind insgesamt 3 Mündungsquerschnitte entnehmbar, wobei zwei davon Zuläufe 44 und einer einen Ablauf 46 bilden. Der Ablauf 46 befindet sich im Zentrum des gezeigten Querschnitts, die beiden Zuläufe 44 sind symmetrisch zu beiden Seiten dieses Ablaufs 46 platziert. Alle drei Mündungsquerschnitte liegen auf einer gemeinsamen Linie 132.

Zur Entlüftung der Fahrzeugbremsanlage 10 nach Figur 1, wird über den Anschluss einer Radbremse 16 unter Druck stehendes Druckmittel in die verschiedenen Leitungen 34 eingespeist. Über das elektronische Steuergerät 42 werden dabei die in ihrer Grundstellung geschlossenen Wegeventile 22 angesteuert und in ihre Öffnungsstellung umgeschaltet. Das eingespeiste Druckmittel strömt über den Zulauf 44 in die Speicherkammer 76 und bewirkt eine Auslenkung des jeweiligen Trennelements 66; 100; 110; 120 in die nicht gezeigte zweite Endposition. Dabei gibt das Trennelement 66; 100; 110; 120 eine Verbindung vom Zulauf 44 zum Ablauf 46 des Speichers 30 frei, so dass das Druckmittel über das in Strömungsrichtung offene Rückschlagventil 32 in Richtung zur Pumpe 26 weiter fließt. Vor der Pumpe 26 verzweigt sich der Druckmittelstrom in einen ersten Zweig, der über das angesteuerte Wegeventil 22 zum Hauptbremszylinder 14 führt bzw. in einen zweiten Zweig, der durch das nicht angesteuerte Wegeventil 20 ebenfalls zum Hauptbremszylinder 14 führt. Nicht vom Druckmittel durchströmte Bereiche der Fahrzeugbremsanlage 10 treten demnach keine auf.

Selbstverständlich sind Weiterbildungen oder Ergänzungen an den beschriebenen Ausführungsbeispielen möglich, ohne vom Grundgedanken der Erfindung abzuweichen.

## Patentansprüche

1. Hydraulische Fahrzeugbremsanlage (10) mit einer muskelkraftbetätigbaren Betriebsbremse und mit einer Vorrichtung zur Regelung des Radschlupfs, umfassend einen Hauptbremszylinder (14), wenigstens eine Radbremse (16) und ein zwischen dem Hauptbremszylinder (14) und der wenigsten eine Radbremse (16) geschaltetes Hydraulikaggregat (18) mit elektromagnetisch ansteuerbaren Wegeventilen (20, 22), wenigstens einer selbstansaugenden Pumpe (26), einem Antrieb für die Pumpe (26), wenigstens einem Speicher (30) zur Versorgung der Pumpe (26) mit Druckmittel, wobei der Speicher (30) ein Trennelement (66; 100; 110) aufweist, das eine über wenigstens einen Zulauf (44) befüllbare und über wenigstens einen vom Zulauf (44) getrennten Ablauf (46) entleerbare erste Speicherkammer (76) gegenüber einer zweiten Speicherkammer (74) trennt und in einer seiner Endlagen eine druckmittelleitende Verbindung des Zulaufs (44) mit dem Ablauf (46) sperrt, einen den Pumpenantrieb betätigenden Elektromotor (24) und einem elektronisches Steuergerät (42) zur bedarfsgerechten Ansteuerung der Wegeventile (20, 22) und/oder des Elektromotors (24),
**dadurch gekennzeichnet,**
**dass** das Trennelement (66;100;110) eine zwischen zwei Endlagen frei beweglich angeordnete Membran (66; 100) ist,
**dass** die zweite Speicherkammer (74) begrenzt ist von einem topfförmigen Trägerelement (62; 94; 110) und der Membran (66; 100), welche eine Öffnung dieses topfförmigen Trägerelements (62; 94; 110) überdeckt und dass das Trägerelement (62; 94; 110) mit der Membran (66; 100) als vormontierbare Baueinheit in einer an die erste Speicherkammer (76) angrenzenden Aufnahme (50) im Hydroblock (40) des Hydraulikaggregats (18) aufgenommen ist.

2. Hydraulische Fahrzeugbremsanlage nach Anspruch 1, **dadurch gekennzeichnet, dass** im Ablauf (46) des Speichers (30) und in Abströmrichtung vor einer Einmündung einer Leitung (34), welche den Hauptzylinder (14) mit der Saugseite der Pumpe (26) verbindet, ein Rückschlagventil (32) vorgesehen ist, mit einem frei beweglich aufgenommenen Ventilschließkörper (84) zur Steuerung eines der ersten Speicherkammer (76) zugewandt liegenden Ventilsitzes (88) und dass das Rückschlagventil (32) stromabwärts des Ventilschließkörpers (84) Mittel (92) aufweist, die eine Umströmung des Ventilschließkörpers (84) mit Druckmittel erlauben.

3. Hydraulische Fahrzeugbremsanlage nach Anspruch 1 oder 2, **dadurch gekennzeichnet, dass** die Membran (66; 100) auf ihrer der ersten Speicherkammer (76) zugewandten Seite eine Dichtplatte (68) trägt, die den Querschnitt des Ablaufs (46) überdeckt.

4. Hydraulische Fahrzeugbremsanlage nach einem der Ansprüche 1 bis 3, **dadurch gekennzeichnet, dass** die Membran (100) eine Rollmembran ist, die unter Ausbildung wenigstens einer Membranfalte (102) die Öffnung des topfförmigen Trägerelements (94) verschließt und dass die Rollmembran Dichtungsabschnitte (98, 106) aufweist zur Abdichtung der zweiten Speicherkammer (74) gegenüber der ersten Speicherkammer (76), zur Abdichtung der zweiten Speicherkammer (74) zur Umgebung und zur Abdichtung des Zulaufs (44) des Speichers (30) gegenüber dem Ablauf (46).

5. Hydraulische Fahrzeugbremsanlage nach einem der Ansprüche 1 bis 4, **dadurch gekennzeichnet, dass** der Speicher (30) über zwei Zuläufe (44) und über einen Ablauf (46) mit Druckmittel versorgt ist, wobei die Zuläufe (44) und der Ablauf (46) nebeneinander auf einer gemeinsamen Linie (132) liegen und der Ablauf (46) zwischen den beiden Zuläufen (44) angeordnet ist.

## Claims

1. Hydraulic vehicle brake system (10) having a service brake which can be actuated by muscle force and having a device for regulating the wheel slip, comprising a master brake cylinder (14), at least one wheel brake (16) and a hydraulic unit (18) which can be connected between the master brake cylinder (14) and the at least one wheel brake (16) and which has directional control valves (20, 22) which can be actuated electromagnetically, at least one self-priming pump (26), a drive for the pump (26), at least one accumulator (30) for supplying the pump (26) with pressure medium, wherein the accumulator (30) has a separating element (66; 100; 110) which can be filled via at least one inflow (44) and separates, from a second accumulator chamber (74), a first accumulator chamber (76) which can be emptied via at least one outflow (46) which is separated from the inflow (44), and in one of its end positions said separating element (66; 100; 110) shuts off a pressure-medium-conducting connection of the inflow (44) to the outflow (46), an electric motor (24) which activates the pump drive, and an electronic control device (42) for actuating the directional control valve (20, 22) and/or the electric motor (24) as required, **characterized**
**in that** the separating element (66; 100; 110) is a diaphragm (66; 100) which is arranged so as to be freely movable between two end positions,
**in that** the second accumulator chamber (74) is bounded by a pot-shaped carrier element (62; 94; 110) and the diaphragm (66; 100) which covers an opening in this pot-shaped carrier element (62; 94; 110), and in that the carrier element (62; 94; 110) is held, with the diaphragm (66; 100) as a pre-mountable unit in a receptacle (50), adjoining the first accumulator chamber (76), in the hydraulic block (40) of the hydraulic unit (18).

2. Hydraulic vehicle brake system according to Claim 1, **characterized in that** a non-return valve (32) is provided in the outflow (46) of the accumulator (30) and in the outflow direction upstream of a junction of a line (34) which connects the master cylinder (14) to the intake side of the pump (26), said non-return valve (32) having a valve-closing body (84) which is held in a freely movable fashion and has the purpose of controlling a valve seat (88) facing the first accumulator chamber (76) and **in that** the non-return valve (32) has, downstream of the valve-closing body (84) means (92) which permit pressure medium to flow around the valve-closing body (84).

3. Hydraulic vehicle brake system according to Claim 1 or 2, **characterized in that** the diaphragm (66; 100) has, on its side facing the first accumulator chamber (76), a sealing plate (68) which covers the cross section of the outflow (46).

4. Hydraulic vehicle brake system according to one of Claims 1 to 3, **characterized in that** the diaphragm (100) is a rolling diaphragm which closes the opening in the pot-shaped carrier element (94) while forming at least one diaphragm fold (102), and **in that** the rolling diaphragm has sealing sections (98, 106) for sealing off the second accumulator chamber (74) with respect to the first accumulator chamber (76), for sealing off the second accumulator chamber (74) with respect to the surroundings, and for sealing off the inflow (44) of the accumulator (30) with respect to the outflow (46).

5. Hydraulic vehicle brake system according to one of Claims 1 to 4, **characterized in that** the accumulator (30) is supplied with pressure medium via two inflows (44) and via an outflow (46), wherein the inflows (44) and the outflow (46) are located one next to the other on a common line (132), and the outflow (46) is arranged between the two inflows (44).

## Revendications

1. Installation de frein hydraulique pour véhicule (10) comprenant un frein de service actionnable par la force musculaire et un dispositif pour la régulation du patinage des roues, comprenant un cylindre de freinage principal (14), au moins un frein de roue (16) et un groupe hydraulique (18) monté entre le cylindre de freinage principal (14) et l'au moins un frein de roue (16), avec des distributeurs (20, 22) à commande électromagnétique, au moins une pompe auto-aspirante (26), un entraînement pour la pompe (26), au moins un accumulateur (30) pour l'alimentation de la pompe (26) en fluide sous pression, l'accumulateur (30) présentant un élément de séparation (66 ; 100 ; 110) qui sépare une première chambre d'accumulateur (76) pouvant être remplie par le biais d'au moins une amenée (44) et vidée par le biais d'au moins une sortie (46) séparée de l'amenée (44) d'une deuxième chambre d'accumulateur (74), et qui, dans l'une de ses positions d'extrémité, bloque une connexion conduisant le fluide sous pression entre l'amenée (44) et la sortie (46), un moteur électrique (24) actionnant l'entraînement de la pompe et un appareil de commande électronique (42) pour la commande en fonction des besoins des distributeurs (20, 22) et/ou du moteur électrique (24), **caractérisée en ce que**
l'élément de séparation (66 ; 100 ; 110) est une membrane (66 ; 100) disposée de manière librement déplaçable entre deux positions d'extrémité,
**en ce que** la deuxième chambre d'accumulateur (74) est limitée par un élément de support en forme de pot (62 ; 94 ; 110) et par la membrane (66 ; 100), qui recouvre une ouverture de cet élément de support en forme de pot (62 ; 94 ; 110) et
**en ce que** l'élément de support (62 ; 94 ; 110) est reçu avec la membrane (66 ; 100) en tant qu'unité constructive prémontable dans un logement (50) adjacent à la première chambre d'accumulateur (76) dans le bloc hydraulique (40) du groupe hydraulique (18).

2. Installation de frein hydraulique pour véhicule selon la revendication 1, **caractérisée en ce que**, dans la sortie (46) de l'accumulateur (30) et dans la direction de l'évacuation avant une embouchure d'une conduite (34) qui relie le cylindre principal (14) au côté d'aspiration de la pompe (26), est prévu un clapet anti-retour (32) avec un corps de fermeture de clapet (84) reçu de manière librement déplaçable pour commander un siège de clapet (88) tourné vers la première chambre d'accumulateur (76) et **en ce que** le clapet anti-retour (32) présente, en aval du corps de fermeture de clapet (84), des moyens (92) qui permettent une circulation de fluide sous pression autour du corps de fermeture de clapet (84).

3. Installation de frein hydraulique pour véhicule selon la revendication 1 ou 2, **caractérisée en ce que** la membrane (66 ; 100) porte, sur son côté tourné vers la première chambre d'accumulateur (76), une plaque d'étanchéité (68) qui recouvre la section transversale de la sortie (46).

4. Installation de frein hydraulique pour véhicule selon l'une quelconque des revendications 1 à 3, **caractérisée en ce que** la membrane (100) est une membrane déroulante qui, en formant au moins un pli de membrane (102), ferme l'ouverture de l'élément de support en forme de pot (94) et **en ce que** la membrane déroulante présente des portions d'étanchéité (98, 106) pour étancher la deuxième chambre d'accumulateur (74) par rapport à la première chambre d'accumulateur (76), pour étancher la deuxième chambre d'accumulateur (74) par rapport à l'environnement et pour étancher l'amenée (44) de l'accumulateur (30) par rapport à la sortie (46).

5. Installation de frein hydraulique pour véhicule selon l'une quelconque des revendications 1 à 4, **caractérisée en ce que** l'accumulateur (30) est alimenté en fluide sous pression par le biais de deux amenées (44) et par le biais d'une sortie (46), les amenées (44) et la sortie (46) étant situées l'une à côté de l'autre sur une ligne commune (132) et la sortie (46) étant disposée entre les deux amenées (44).
